# EUROPEAN PATENT SPECIFICATION

(11) **EP 3 080 314 B1**
(45) Date of publication and mention of the grant of the patent: **04.12.2019**
(21) Application number: 13802981.4
(22) Date of filing: 11.12.2013
(51) Int. Cl.: C22B 1/02, C01B 35/00, C22B 1/10

(54) **ARSENIC REMOVAL FROM MINERALS**
ENTFERNUNG VON ARSEN AUS MINERALIEN
ÉLIMINATION DE L'ARSENIC PRÉSENT DANS DES MINÉRAUX

(43) Date of publication of application: 19.10.2016
(73) Proprietor: Outotec (Finland) Oy, 02230 Espoo (FI)
(72) Inventor: SCHNEIDER, Günter, 64653 Lorsch (DE); ANASTASIJEVIC, Nikola, 63674 Altenstadt (DE); GÜNTNER, Jochen, 63796 Kahl (DE)
(74) Representative: Keil & Schaafhausen Patent- und Rechtsanwälte PartGmbB
(86) International application number: PCT/EP2013/076216
(87) International publication number: WO 2015/086061

(56) References cited:
- WO-A1-2012/080558
- WO-A2-2004/057044
- WO-A2-2008/077462
- CN-A- 102 534 087
- CN-A- 102 628 097
- DE-B- 1 134 400
- GB-A- 856 888
- GB-A- 880 792
- US-A- 3 427 149
- US-A- 3 551 138
- US-A- 3 914 124
- US-A- 4 185 996
- US-A- 4 919 715
- US-A- 5 123 956
- F.ARSLAN ET AL: "Arsenic removal through the description of colemanite ore", POWDER TECHNOLOGY, vol. 103, 1999, pages 260-264, XP002728060,
- A.KÜNKÜL ET AL: "Boric Acid Extraction from Calcined Colemanite with Ammonium Carbonate Solutions", I&EC RESEARCH, 12 February 2012 (2012-02-12), pages 3612-3618, XP002728061, DOI: dx.doi.org/10.1021/ie202388x

## Description

### FIELD OF THE INVENTION

The present invention relates to a method for removing arsenic from pyrite-free material selected from borate minerals, such as colemanite and howlite.

### BACKGROUND OF THE INVENTION

Borate minerals, such as colemanite and howlite, contain arsenic compounds as typical impurities. Before further processing of colemanite minerals for example by sulphatization, arsenic must be removed. Sulphatization is an essential step in the manufacture of chemicals such as boric acid from colemanite.

GB 1 344 024 discloses a process for removing arsenic compounds, such as arsenic sulphides As4S4 and AS2S2 from borate ores, such as ulexite, colemanite and tincal, by froth flotation at a temperature of at least 75°C.

US 4 756 894 discloses a process for obtaining boric acid from colemanite and/or howlite minerals. The process comprises treatment of the mineral with sulphuric acid to dissolve boron compounds, reacting the solution thus obtained with hydrogen sulphide to precipitate arsenic and iron impurities, separating the impurities, cooling the remaining solution to precipitate boric acid and separating boric acid from the solution. The reaction with sulphuric acid takes place at a temperature of 85 to 95°C. The reaction with hydrogen sulphide takes place at a temperature of 30 to 90°C. In this process, arsenic is removed by precipitation as arsenic sulphide. A similar process for removing arsenic from colemanite and/or howlite minerals is disclosed in US 4 756 745 and US 4 804 524.

DE 000019626034 A1 discloses a method of preparing calcium borate from a mineral containing borate salts by reacting the mineral with sulphuric acid at a temperature in the range of 90 to 100°C. The mineral used as the starting material may be colemanite, howlite or a mixture thereof, for ex-ample. It is also recited that the method may comprise a washing process as a pretreatment step for partial removal of impurities, such as arsenic sulphide.

DE 1 134 400 discloses a process for removing arsenic from oxidic ores as arsenic trioxide using a mixture of hydrogen and water vapour, optionally diluted with nitrogen and/or carbonic acid. The process is performed at a temperature of more than 500°C, preferably 900 to 1 100°C. The process may be performed in a fluidized bed. Reference is also made to known processes wherein arsenic is removed from oxidic iron-containing ores or pyrites with the aid of reducing agents, such as hydrogen, at high temperatures of 900 to 1000°C.

Document WO 2012/080558 A1 concerns a process and a plant for treating ore concentrate particles containing valuable metal and having at least arsenic and sulfur containing components. The process comprises a two-stage roasting process comprising a first roasting step in a first roasting reactor and a second roasting step in a second roasting reactor. A gas mixture is formed from the first process gas component obtained from the first roasting step and from the second process gas component obtained from the second roasting step. Post combustion of the gas mixture is made in a post combustion chamber. The post combustion operates with said reducing and sulfide rich first process gas component and the second process gas component as oxidizer gas in order to decompose SO3 in the gas mixture to reduce the SO3 content. Finally the exit gas is exposed to subsequent gas cooling and dust removal steps.

From WO 2008/077462 A2, a process is known which relates to the production of an anhydrous metal oxide from metal hydroxide, wherein the metal hydroxide is at least partly dehydrated and preheated, before the metal hydroxide is introduced into a fluidized-bed reactor. Therefore the metal hydroxide is heated to a temperature of about 650 to about 1250 °C by combustion of fuel, and metal oxide is generated. Primary air and/or secondary air enriched with oxygen is supplied to the fluidized-bed reactor. To achieve a rather low dust emission and a small amount of grain disintegration, the oxygen or the gas enriched with oxygen is introduced into the fluidized-bed reactor with a low gas velocity.

US 5,123,956 teaches a recovery of a precious metal value from refractory carbonaceous and sulfidic ores, concentrates or tailings which also include arseniccontaining components. The specific process should be improved by roasting the ore or ore concentrate in an oxygen-enriched gaseous atmosphere having an initial oxygen content from about 25 to about 65 vol.-% while maintaining a reaction temperature of less than about 600 °C during the roasting and while maintaining a minimum amount of iron to react with arsenic and for forming ferricarsenate; thereafter recovering a thus-roasted ore as calcine, whereby the calcine is amenable to recovery of precious metal values in it; gold ores are preferred candidate ores.

In US 4,919,715 A, gold-containing ores, having refractory sulfidic matter or a combination of refractory sulfidic matter and refractory carbonaceous matter, are processed to recover their gold values. The process uses an ore roasting procedure that utilizes a two-state, fluidized bed roaster. The process also employs a pure oxygen atmosphere during roasting. A carbon-in-leach step is desirably used to extract gold values from the roasted ore.

Document CN 102 628 097 A discloses a method for preparing iron concentrate powder by reducing and magnetizing red mud in a fluidized bed comprising the steps of magnetizing, reducing and baking the dried and pre-heated red mud powder. The resulting exhaust gas is partly burned part for the pre-heating while the remaining part is mixed with gas of a gas generating furnace to build the fluidizing gas.

DE 1 030 819 discloses a continuous process for preparing arsenicfree elemental sulphur and arsenic-free sulphur dioxide from ores containing sulphur and arsenic, such as pyrite ores. The process comprises three successive steps: an arsenic removal step, a step of distillation of labile Sulphur and a final roasting step. The removal of arsenic is performed by roasting at a temperature of 500 to 550°C in a fluidized bed reactor with the aid of Sulphur dioxide containing roasting gases exiting from the final roasting step and optionally using also gases exiting from the distillation step. Arsenic is removed as arsenic sulphide.

DE 1 134 096 discloses a fluidized bed process using a gas containing free oxygen, such as air, for roasting arsenic-containing pyrites for obtaining an arsenic-free roasting product. The roasting process is performed at a temperature of 850 to 900°C in the presence of a shortage of oxygen. Arsenic is removed as volatile arsenic compounds (As2S2, As4, As4O5) from the roasting step, followed by separating the dust in a dust separator, whereafter the volatile arsenic compounds are oxidized to non-volatile arsenic compounds in the presence of an excess of oxygen and separated by conventional means, such as washing or electrostatic precipitation.

A further method for As removal from colemanite is disclosed by Arslan et al, in Powder technology 103 (1999), 260-264.

The pyrite-free colemanite processes described in US 4 756 894, US 4 756 7 45 and US 4 804 524 above are based on technology involving the use of sulphuric acid. The handling of sulphuric acid has several disa vantages, for example a long distance transport and considerable waste water problems. On the other hand, the above-described pyrite processes described in DE 1 030 819 and DE 1 030 819, based on fluidized bed roasting technologies, are not as such applicable to non-pyrite materials, such as colemanite.

Consequently, there is a need for improved roasting processes, especially on the basis of fluidized bed technologies for removing arsenic from pyrite-free materials, avoiding the use of sulphuric acid.

### BRIEF DESCRIPTION OF THE INVENTION

An object of the present invention is thus to provide a method for implementing the method so as to alleviate the above disadvantages. The objects of the invention are achieved by a method and an arrangement which are characterized by what is stated in the independent claims. The preferred embodiments of the invention are disclosed in the dependent claims.

The invention is based on performing the dearsenification of pyrite-free materials by roasting in reducing conditions.

It is an advantage of the method and arrangement of the invention that the dearsenification can be performed in dry conditions, avoiding the use of sulphuric acid and related waste disposal challenges.

### BRIEF DESCRIPTION OF THE DRAWINGS

In the following the invention will be described in greater detail by means of preferred embodiments with reference to the attached drawings, in which
Figure 1 is an exemplary embodiment of the invention, showing a basic flowsheet of a process for arsenic removal under hydrogen atmosphere;
Figure 2 is another exemplary embodiment of the invention, showing a basic flowsheet of a process for arsenic removal with a reduction gas produced in a separate combustion chamber;
Figure 3 is a further exemplary embodiment of the invention, showing a basic flowsheet of a process with a reduction gas produced in the dearsenification reactor itself, wherein an after-combustion chamber for off-gases is placed after the off-gas purification unit;
Figure 4 is a still further exemplary embodiment of the invention, showing a basic flowsheet of a process with a reduction gas produced in the dearsenification reactor itself, wherein an after-combustion chamber for off-gases is placed in context with the off-gas purification unit.

### DETAILED DESCRIPTION OF THE INVENTION

The invention relates to a method of removing arsenic from pyrite-free materials by subjecting the pyrite-free material to roasting at a temperature of less than 900°C in reducing conditions.

The pyrite-free starting materials for the method of the invention are typically selected from borate minerals and concentrates. In a preferred embodiment of the invention, the pyrite-free minerals are selected from colemanite and howlite.

In one aspect of the invention, the reducing conditions in roasting are generated by introducing a reducing gas to roasting.

The reducing gas may be hydrogen, which is typically preheated to a temperature in the range of 150 to 600°C, preferably 200 to 350°C. The reducing gas may also be a gas obtained from the combustion of a natural gas or a liquefied petroleum gas. The gas obtained as the combustion product contains gases such as H₂: 0-40 Vol-%, CO: 0-20 Vol-%, H₂O: 0-20 Vol-%, CO₂: 0-10 Vol-%, N₂: 35-75 Vol-%, O₂: 0 Vol-%, which are then introduced to roasting.

In another aspect of the invention, the reducing gas for roasting is produced in the roasting reactor itself. In this aspect of the invention, the gas introduced to roasting may be selected from hydrogen, a natural gas or a liquefied petroleum gas. The reducing gases formed in the roasting comprise gases such as H₂: 0-35 Vol-%, CO: 0-15 Vol-%, H₂O: 5-25 Vol-%, CO₂: 5-15 Vol-%, N₂: 40-70 Vol-%, O₂: 0 Vol-%.

In a preferred embodiment of the invention, roasting is performed in a fluidized bed. Different types of fluidized bed reactors can be used for the fluidization, such as a fluidized bed reactor, a circulated fluidized bed reactor or an annular fluidized bed reactor. The reactor type depends on the fluidization behaviour, reaction kinetics and capacity. A fluidized bed reactor (FB reactor) is suitable for moderate and critical fluidization behaviour and/or slow reaction kinetics and low capacity. A circulated fluidized bed reactor (CFB reactor) is suitable for good fluidization behaviour and moderate or fast reaction kinetics and high capacity. An annular fluidized bed reactor (AFB reactor) is suitable for the same process conditions as the CFB reactor above as well as in situations where the temperature of the fluidization gas is higher than about 400 °C and other situations thus avoiding the necessity to introduce the fluidizing gas through tuyeres, which have typically a temperature limit of 400 to 500 °C.

When the roasting is performed in a fluidized bed, the gas introduced to roasting acts as the fluidization gas. Consequently, the fluidization gas may be (preheated) hydrogen, a natural gas or a liquid petroleum gas, or a gas obtained from the combustion of a natural gas or liquefied petroleum gas.

In an embodiment of the invention, the pyrite-free material is pre-heated to a temperature in the range of 200 to 600°C, preferably 300 to 500°C, prior to the introduction to roasting. The preheating may be performed by different methods, such as by a circulated fluidized bed (CFB) method, a counter-current-ventury method or a rotary kiln method.

Roasting is performed at a temperature in the range 400 to 800°C, preferably 500 to 700°C. The pressure in the roasting is typically in the range of 10 kPa to 300 kPa. The retention time in roasting can be selected in the range from a few minutes to several hours.

Arsenic exits from roasting with off-gases in a volatile form, mainly as arsenic sulfide or a mixture of arsenic sulfide and arsenic trioxide.

From roasting, the arsenic-containing off-gases are introduced to purification. Purification typically comprises dedusting and quenching to obtain purified off-gases and the arsenic compound in solid form. Dedusting may be performed by cyclones and/or filters, for example. Quenching is typically performed in an alkaline type of scrubber with sodium hydroxide (NaOH). The arsenic compound is recovered in solid form as fine dust.

The purified off-gases may be recycled to roasting, after optional preheating.

In one embodiment of the invention, the off-gases from the roasting may be subjected to combustion, either before or after or in context with the purification. Combustion of the off-gases is especially applied to the aspect of the invention where the reducing gas for roasting is generated in the roasting reactor itself, where after-combustion is typically required. The after-combustion is typically performed with air.

The pyrite-free material is recovered from roasting as arsenic-free calcium borate, which may then be subjected to sulphatization for the manufacture of boric acid.

In a further aspect of the invention, the invention relates to an arrangement for removing arsenic from pyrite-free materials, which comprises:
(a) a dearsenification unit which is adapted for removing arsenic from pyrite-free material by roasting with preheated hydrogen to form arsenic-free calcium borate and arsenic-containing off-gases,
(b) a first preheating unit which is adapted for preheating the pyrite-free material,
(c) a second preheating unit which is adapted for preheating the hydrogen,
(d) a purification unit which is adapted for purifying the arsenic-containing off-gases to obtain purified off-gases and an arsenic compound in solid form.

An arrangement for removing arsenic from pyrite-free materials comprises:
(a) a dearsenification unit, which is adapted for removing arsenic from pyrite-free material by roasting with a gas obtained from combustion of a natural gas or liquefied petroleum gas to form arsenic-free calcium borate and arsenic-containing off-gases,
(b) a preheating unit which is adapted for preheating the pyrite-free material,
(c) a combustion unit which is adapted for combusting a natural gas or liquefied petroleum gas, and
(d) a purification unit which is adapted for purifying the arseniccontaining off-gases to obtain purified off-gases and an arsenic compound in solid form.

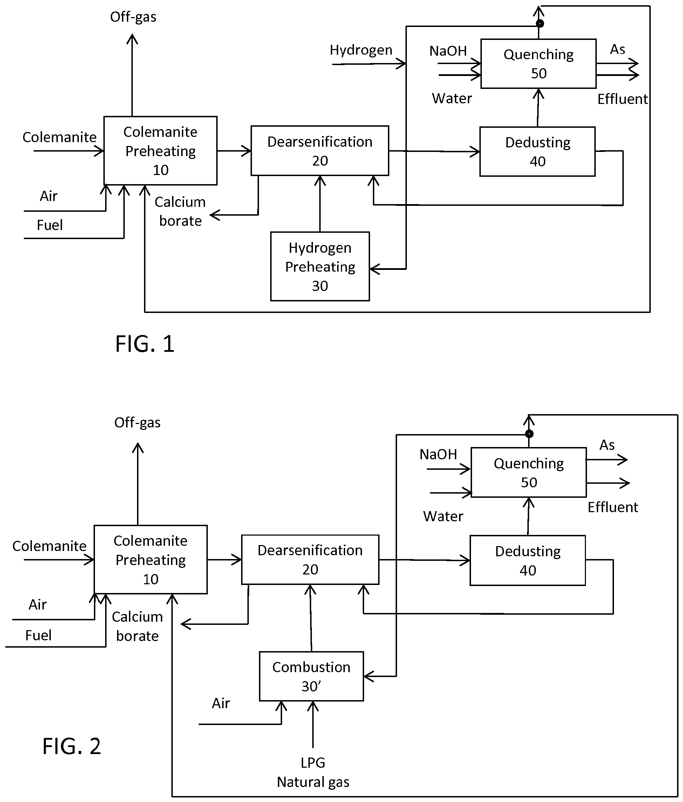

In the following, the invention will be illustrated by referring to Figures 1 to 4, which are exemplary examples of the method of the invention, showing also combinations of various pre-treatment steps and post-treatment steps. The exemplary examples of Figures 1-4 are not meant to limit the invention in any way.

Referring to Figure 1, this shows a basic flowsheet of a process for arsenic removal under hydrogen atmosphere. Colemanite is first subjected to preheating (10). The preheating is performed by a circulated fluidization bed method. In the preheating, colemanite is preheated to a temperature of 470°C. In the preheating, colemanite starts to decompose to calcium borate. Preheated colemanite (arsenic-containing colemanite with calcium borate) is further introduced to dearsenification (20). The dearsenification is performed by roasting at a temperature of 500°C in a fluidized bed reactor using preheated hydrogen as the fluidization gas. Preheated hydrogen is obtained from a separate preheating stage (30), where hydrogen is preheated to a temperature of
200 to 350°C. Dearsenification produces arsenic-free calcium borate and arsenic-containing off-gases. Arsenic-free calcium borate is recovered from the process. Arsenic-containing off-gases are introduced to purification by dedusting and quenching (40, 50). The solid material from dedusting (40) is returned to dearsenification (20). The dedusted arsenic-containing off-gases are introduced to quenching (50) in an alkaline scrubber with NaOH. Arsenic (As) is recovered from quenching in the form of fine dust (arsenic sulfide or mixture of arsenic sulfide wih arsenic trioxide). The purified arsenic-free off-gases may be recycled to the hydrogen preheating (30) and thereafter to dearsenification (20). Optionally, the purified off-gases may be introduced to combustion with a fuel to generate hot gas for the colemanite preheating (10) (not shown in Figure 1).

In the embodiment of Figure 1, the energy needed for roasting is supplied by the preheated colemanite. No combustion of hydrogen is necessary in the dearsenification reactor.

Referring now to Figure 2, this shows a basic flowsheet of a process for arsenic removal with a reduction gas produced in a separate combustion chamber. The basic process is otherwise the same as in Figure 1, but the reducing gas for dearsenification is obtained from a separate combustion chamber (30'), where a natural gas or a liquefied petroleum gas (LPG) is burnt and the combustion gases are then introduced to dearsenification (20) as the fluidization gases.

The embodiment of Figure 2 is suitable for situations where the temperature in the dearsenification reactor is reasonably low (such as 500 to 700 °C) and for a fuel (such as natural gas) which requires a high temperature to combust partially.

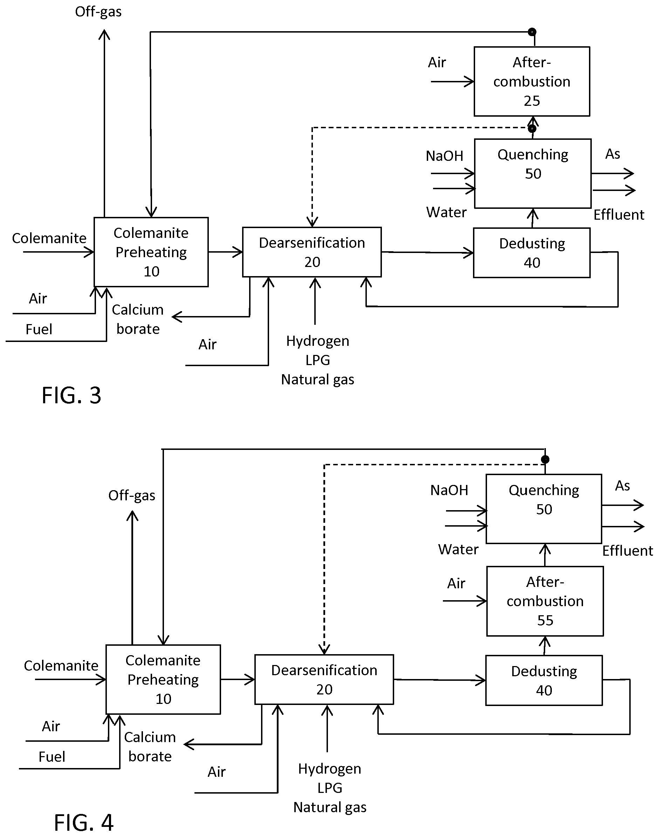

Referring now to Figure 3, this shows a basic flowsheet of a process with a reducing gas produced in the dearsenification reactor itself. The process is otherwise the same as in Figure 1, but the fluidization gas (hydrogen, LPG or natural gas) is introduced to the dearsenification reactor (20) without preheating. The dearsenification is performed at a temperature of 600 to 800 °C. Furthermore, there is an after-burning chamber (25) for the off-gases (containing CO and hydrogen) placed after the off-gas purification unit (40,50). The after-combustion of the off-gases is performed with air. The off-gases from the after-combustion are recycled to colemanite preheating (10). Furthermore, an optional off-gas stream from quenching (50) may be introduced to dearsenification.

The embodiment of Figure 3 is suitable for situations where the applied fuel combusts partially at the dearsenification temperature and where the energy for the reduction can be provided via combustion of the fuel in the dearsenification reactor itself.

Referring now to Figure 4, this shows a basic flowsheet of another process with a reduction gas produced in the derarsenification reactor itself. The process is otherwise the same as in Figure 3, but the after-combustion chamber (55) for off-gases is placed ahead of the quenching section (50) of the off-gas purification unit (40,50).

In the same way as the embodiment of Figure 3, Figure 4 is suitable for situations where the applied fuel combusts partially at the dearsenification temperature and where the energy for the reduction can provided via combustion of the fuel in the dearsenification reactor itself.

It will be obvious to a person skilled in the art that, as the technology advances, the inventive concept can be implemented in various ways. The invention and its embodiments are not limited to the examples described above but may vary within the scope of the claims.

## Claims

1. A method of removing arsenic from pyrite-free materials, **characterized by** subjecting the pyrite-free material selected from borate minerals and concentrates to roasting at a temperature of less than 900°C in reducing conditions.

2. The method as claimed in claim 1, **characterized in that** the pyrite-free minerals are selected from colemanite and howlite.

3. The method as claimed in any one of the preceding claims, **characterized in that** roasting is performed in a fluidized bed.

4. The method as claimed in any one of the preceding claims, **characterized in that** the reducing conditions are generated by introducing a reducing gas to roasting, wherein the reducing gas preferably is hydrogen, which is preferably preheated to a temperature in the range of 150 to 600°C, preferably 200 to 350°C, or **in that** the reducing gas is a gas obtained from the combustion of a natural gas or a liquefied petroleum gas.

5. The method as claimed in any one of the preceding claims, **characterized in that** the reducing conditions are generated by introducing to roasting a gas which forms a reducing gas in roasting conditions, wherein preferably the gas introduced to roasting is selected from hydrogen, a natural gas or a liquefied petroleum gas.

6. The method as claimed in claim 3 and any one of claims 4 to 5, **characterized in that** the gas introduced to roasting is used as the fluidization gas.

7. The method as claimed in any one of the preceding claims, **characterized in that** prior to the introduction to roasting, the pyrite-free material is preheated to a temperature in the range of 200 to 600 °C, preferably 300 to 500°C, and **in that** the preheating preferably is performed by a method selected from a circulated fluidized bed (CFB) method, a counter-current-venturi method and a rotary kiln method.

8. The method as claimed in any one of the preceding claims, **characterized in that** roasting is performed at a temperature in the range 400 to 800°C, preferably 500 to 700°C.

9. The method as claimed in any one of the preceding claims, **characterized in that** arsenic exits from roasting with off-gases in a volatile form to produce arsenic-containing off-gases, wherein preferably arsenic exits as arsenic sulfide or a mixture of arsenic sulfide and arsenic trioxide.

10. The method as claimed in claim 9, **characterized in that** the method further comprises purification of the arsenic containing off-gases to obtain purified off-gases and arsenic compounds in solid form, wherein the purification preferably comprises dedusting and quenching, and wherein the purified off-gases are preferably recycled to roasting or to preheating of the gas introduced to roasting.

11. The method as claimed in claim 10, **characterized in that** purified off-gases are introduced to combustion, preferably prior to purification, wherein the heat liberated in combustion preferably is introduced to the preheating of the pyrite-free material.

12. The method as claimed in any one of the preceding claims, **characterized in that** the pyrite-free material is recovered as arsenic-free calcium borate from roasting.

## Patentansprüche

1. Verfahren zum Entfernen von Arsen aus pyritfreien Materialien, **dadurch gekennzeichnet, dass** das pyritfreie Material, ausgewählt aus Boratmineralien und Konzentraten, einer Röstung bei einer Temperatur von weniger als 900 °C unter reduzierenden Bedingungen unterzogen wird.

2. Verfahren nach Anspruch 1, **dadurch gekennzeichnet, dass** die pyritfreien Mineralien ausgewählt sind aus Colemanit und Howlith.

3. Verfahren nach einem der vorhergehenden Ansprüche, **dadurch gekennzeichnet, dass** das Rösten in einer Wirbelschicht durchgeführt wird.

4. Verfahren nach einem der vorhergehenden Ansprüche, **dadurch gekennzeichnet, dass** die Reduktionsbedingungen durch Einleiten eines Reduktionsgases zum Rösten erzeugt werden, wobei das Reduktionsgas vorzugsweise Wasserstoff ist, der vorzugsweise auf eine Temperatur im Bereich von 150 bis 600 °C, vorzugsweise 200 bis 350 °C, vorgewärmt wird, oder dass das Reduktionsgas ein Gas ist, das aus der Verbrennung eines Erdgases oder eines Flüssiggases erhalten wurde.

5. Verfahren nach einem der vorhergehenden Ansprüche, **dadurch gekennzeichnet, dass** die reduzierenden Bedingungen durch Einbringen eines Gases, das unter Röstbedingungen ein reduzierendes Gas bildet, in das Rösten erzeugt werden, wobei vorzugsweise das zum Rösten eingeführte Gas ausgewählt ist aus Wasserstoff, einem Erdgas oder einem verflüssigten Erdölgas.

6. Verfahren nach einem der vorhergehenden Ansprüche, **dadurch gekennzeichnet, dass** das beim Rösten zugeführte Gas als Fluidisierungsgas verwendet wird.

7. Verfahren nach einem der vorhergehenden Ansprüche, **dadurch gekennzeichnet, dass** das pyritfreie Material vor der Einführung in das Rösten auf eine Temperatur im Bereich von 200 bis 600 °C, vorzugsweise 300 bis 500 °C, vorgewärmt wird und dass das Vorwärmen vorzugsweise nach einem Verfahren durchgeführt wird, das ausgewählt ist aus einem zirkulierenden Wirbelschichtverfahren (CFB), einem Gegenstrom-Venturi-Verfahren und einem Drehrohrofenverfahren.

8. Verfahren nach einem der vorhergehenden Ansprüche, **dadurch gekennzeichnet, dass** das Rösten bei einer Temperatur im Bereich von 400 bis 800 °C, vorzugsweise 500 bis 700 °C, durchgeführt wird.

9. Verfahren nach einem der vorhergehenden Ansprüche, **dadurch gekennzeichnet, dass** Arsen während dem Rösten zusammen mit Abgasen in flüchtiger Form austritt, um arsenhaltige Abgase zu erzeugen, wobei vorzugsweise Arsen als Arsensulfid oder eine Mischung aus Arsensulfid und Arsentrioxid austritt.

10. Verfahren nach Anspruch 9, **dadurch gekennzeichnet, dass** das Verfahren ferner die Reinigung der arsenhaltigen Abgase umfasst, um gereinigte Abgase und Arsenverbindungen in fester Form zu erhalten, wobei die Reinigung vorzugsweise das Entstauben und Abschrecken umfasst, und wobei die gereinigten Abgase vorzeitig zum Rösten oder zum Vorwärmen des zum Rösten eingeleiteten Gases zurückgeführt werden.

11. Verfahren nach Anspruch 10, **dadurch gekennzeichnet, dass** gereinigte Abgase der Verbrennung, vorzugsweise vor der Reinigung, zugeführt werden, wobei die bei der Verbrennung freigesetzte Wärme vorzugsweise der Vorwärmung des pyritfreien Materials zugeführt wird.

12. vorzugsweise vor der Reinigung, das pyritfreie Material als arsenfreies Calciumborat aus dem Rösten gewonnen wird.

## Revendications

1. Procédé d'élimination de l'arsenic de matériaux sans pyrite, **caractérisé par** la soumission du matériau sans pyrite choisi parmi des minéraux et des concentrés de borate pour la torréfaction à une température de moins de 900 °C dans des conditions réductrices.

2. Procédé selon la revendication 1, **caractérisé en ce que** les minéraux sans pyrite sont choisis parmi la colémanite et l'howlite.

3. Procédé selon l'une quelconque des revendications précédentes, **caractérisé en ce que** la torréfaction est effectuée dans un lit fluidisé.

4. Procédé selon l'une quelconque des revendications précédentes, **caractérisé en ce que** les conditions réductrices sont produites par l'introduction d'un gaz réducteur à la torréfaction, où le gaz réducteur est de préférence de l'hydrogène, qui est de préférence préchauffé à une température dans la plage de 150 à 600 °C, de préférence de 200 à 350 °C, ou **en ce que** le gaz réducteur est un gaz obtenu de la combustion d'un gaz naturel ou d'un gaz de pétrole liquéfié.

5. Procédé selon l'une quelconque des revendications précédentes, **caractérisé en ce que** les conditions réductrices sont produites par l'introduction à la torréfaction d'un gaz qui forme un gaz réducteur dans les conditions de torréfaction, où de préférence le gaz introduit à la torréfaction est choisi parmi l'hydrogène, un gaz naturel et un gaz de pétrole liquéfié.

6. Procédé selon la revendication 3 et l'une quelconque des revendications 4 à 5, **caractérisé en ce que** le gaz introduit à la torréfaction est utilisé comme gaz de fluidisation.

7. Procédé selon l'une quelconque des revendications précédentes, **caractérisé en ce qu'**avant l'introduction à la torréfaction, le matériau sans pyrite est préchauffé à une température dans la plage de 200 à 600 °C, de préférence de 300 à 500 °C, et **en ce que** le préchauffage est de préférence effectué par un procédé choisi parmi un procédé de lit fluidisé en circulation (CFB), un procédé de venturi de contre-courant et un procédé de four rotatif.

8. Procédé selon l'une quelconque des revendications précédentes, **caractérisé en ce que** la torréfaction est effectuée à une température dans la plage de 400 à 800 °C, de préférence de 500 à 700 °C.

9. Procédé selon l'une quelconque des revendications précédentes, **caractérisé en ce que** l'arsenic sort de la torréfaction avec les effluents gazeux sous forme volatile pour produire des effluents gazeux contenant de l'arsenic, où de préférence l'arsenic sort sous forme de sulfure d'arsenic ou d'un mélange de sulfure d'arsenic et de trioxyde d'arsenic.

10. Procédé selon la revendication 9, **caractérisé en ce que** le procédé comprend en outre la purification des effluents gazeux contenant de l'arsenic pour obtenir des effluents gazeux purifiés et des composés d'arsenic sous forme solide, où la purification comprend de préférence le dépoussiérage et la désactivation, et où les effluents gazeux purifiés sont de préférence recyclés à la torréfaction ou au préchauffage du gaz introduit à la torréfaction.

11. Procédé selon la revendication 10, **caractérisé en ce que** les effluents gazeux purifiés sont introduits à la combustion, de préférence avant la purification, où la chaleur libérée dans la combustion est de préférence introduite au préchauffage du matériau sans pyrite.

12. Procédé selon l'une quelconque des revendications précédentes, **caractérisé en ce que** le matériau sans pyrite est récupéré sous forme de borate de calcium sans arsenic de la torréfaction.
